## Europäisches Patentamt

(19) **European Patent Office**

**Office européen des brevets**

(11) Publication number: **0 127 231**
**B1**

(12) **EUROPEAN PATENT SPECIFICATION**

(45) Date of publication of patent specification: **26.08.87**

(51) Int. Cl.⁴: **G 02 B 1/10, C 03 C 17/34**

(21) Application number: **84200697.5**

(22) Date of filing: **15.05.84**

(54) **Optical element comprising a transparent substrate and an anti-reflection coating for the near-infrared region of wavelengths.**

(30) Priority: **24.05.83 NL 8301824**

(43) Date of publication of application:
**05.12.84 Bulletin 84/49**

(45) Publication of the grant of the patent:
**26.08.87 Bulletin 87/35**

(84) Designated Contracting States:
**DE FR GB IT SE**

(56) References cited:
**GB-A-1 136 218**
**GB-A-1 380 793**
**US-A-2 852 415**
**US-A-3 706 485**
**US-A-3 804 491**

**LASER FOCUS, vol. 13, no. 4, April 1977, pages 50-53, Advanced Technology Publication Inc., Newton, US; F.M. LUSSIER: "A quick guide to coatings"**

(73) Proprietor: **N.V. Philips' Gloeilampenfabrieken**
**Groenewoudseweg 1**
**NL-5621 BA Eindhoven (NL)**

(72) Inventor: **Van der Werf, Pieter**
**c/o INT. OCTROOIBUREAU B.V. Prof. Holstlaan 6**
**NL-5656 AA Eindhoven (NL)**
Inventor: **Haisma, Jan**
**c/o INT. OCTROOIBUREAU B.V. Prof. Holstlaan 6**
**NL-5656 AA Eindhoven (NL)**

(74) Representative: **Cobben, Louis Marie Hubert et al**
**INTERNATIONAAL OCTROOIBUREAU B.V. Prof. Holstlaan 6**
**NL-5656 AA Eindhoven (NL)**

Courier Press, Leamington Spa, England.

EP 0 127 231 B1

## Description

The invention relates to an optical element comprising a transparent substrate provided with an anti-reflection coating for the range of wavelengths from approximately 700 nm to approximately 1700 nm, which coating comprises a top coating of a plurality of uniform layers whose refractive indices decrease towards the outside, and an underlying basic coating.

The optical element may be an element of a fibre telecommunication system, such as a lens or the end face of a fibre. In this respect fibre is to be understood to mean a light-conducting fibre with cladding. The optical element may also be an element of an infrared scanning system for medical or military use.

British Patent Specification no. 1,380,793 describes an anti-reflection coating which is suitable for the visible range of wavelengths, i.e. for the range from approximately 400 nm to approximately 800 nm. This coating comprises five superimposed homogenous layers having different refractive indices and each having an optical thickness equal to $\lambda_o/4$, $\lambda_o$ being a reference wavelength. The first layer on the substrate has a refractive index which is greater than that of the substrate. The second layer deposited on this first layer has a refractive index which is greater than that of the first layer. These two layers form the basic coating. The next three layers have refractive indices which decrease towards the outside and form the top coating.

Inter alia in telecommunications systems using optical fibre guides, it is desirable to eliminate reflections over a wide range of wavelengths from approximately 800 nm to approximately 1650 nm. This is because in optical telecommunications systems two basic types of light sources are used, that is, diode lasers of the GaAs-type, which emit wavelengths in the range from approximately 800 nm to approximately 900 nm, and diode lasers of the InP-type, which emit wavelengths in the range between approximately 1100 nm and approximately 1650 nm. The reflection coefficents of the elements in optical telecommunication systems should preferably be 0.5 % or less.

The present invention aims at providing an anti-reflection coating whic is suitable for at least the specified range of wavelengths and by means of which the desirerd low reflection coefficient for the elements can be obtained. The anti-reflection coating is based on the idea that a substrate whose reflection is to be reduced and which has a refractive index of an arbitrary value between for example 1.45 and for example 2.0, can first be coated with a basic coating which is such that the refractive index of the assembly has one of some suitable values, for which values an anti-reflection top coating is easy to compose or is even available already.

According to the invention the optical element is characterized in that the effective refractive index at the top of the basis coating is at least 2.5 and this basic coating comprises a graded-index layer whose refractive index at the location of the substrate is equal to that of the substrate.

The effective refractive index at the top of the basic coating is defined as the refractive index of the assembly comprising the substrate and the basic coating.

A graded-index layer is defined as a layer of an inhomogeneous material whose refractive index varies gradually from a specific value, in the present case the substrate refractive-index, to a higher or a lower value. Such a layer can be obtained, for example by the simultaneous vacuum-deposition of two materials having a higher and a lower refractive index respectively, the mixing ratio of the two materials being changed continuously.

The invention is based on the recognition of the fact that, as the effective refractive index at the top of the basic coating increases, the reflection coefficient of the entire coating can be reduced and the range of wave-lengths for which the reflection coefficient is low and can be extended, and also that for the infrared region from 700 nm to 1700 nm vacuum-deposition materials are available with substantially higher refractive indices than those of the materials available for the range of visible light.

There are two main embodiments of the invention. The first main embodiment is further characterized in that the basic coating comprises a single graded index layer having a refractive index which is at least 2.5 at the top of the layer, and in that the top coating comprises three homogenous layers which each have an optical thickness equal to $\lambda_o/4$, $\lambda_o$ being a reference wavelength.

The reference wavelength is wavelength which is representative of the relevant region. For the coatings described here the reference wavelength is 1000 nm.

It is to be noted that in United States Patent Specification no. 3,804,491 an anti-reflection coating is described which comprises a layer deposited on the substrate, which layer has a refractive which from a value equal to that of the substrate index gradually increases towards the outside. However, this coating is intended for the visible range of wavelengths and not for the near-infrared region. Moreover, according to this Patent Specification the refractive index of the layers should preferably be smaller than 2. On the layer with an increasing refractive index two layers are deposited, one having an optical thickness of $\lambda_o/4$ and the other having an optical thickness of $\lambda_o/2$, whereas in the first main embodiment of the anti-reflection coating in accordance with the invention three layers of different refractive indices are deposited on the graded-index layer, which three layers each have an optical thickness equal to $\lambda_o/4$.

A preferred version of the first main embodiment is further characterized in that the effective refractive index at the top of the graded-index layer is at least 3.5, which layer comprises one of the following mixtures:

Si and $Si_3N_4$
Si, $Si_3N_4$ and $SiO_2$
GaP and GaN
GaP. GaN and $Ga_2O_3$
PbS and ZnS
PbS, ZnS and a B-Na-Al-K glass.

The second main embodiment of the anti-reflection coating in accordance with the invention is characterized in that the basic coating comprises a first, graded-index, layer whose refractive index decreases towards the outside to a value lower than that of the substrate refractive-index and at least two homogeneous layers whose refractive indices increase towards the outside, and in that the top coating comprises three layers which each have an optical thickness equal to $\lambda_o/4$, $\lambda_o$ being the reference wavelength.

The effect of the second and the third layer is that the effective refractive index at the top of the basic coating is at least 2.5.

It is to be noted that in the German Patent Application no. 2,341,359, which has been laid open to public inspection, an anti-reflection coating is described which comprises three groups of layers, of which, starting from the substate, the layers of the first group have a decreasing refractive index, the layers of the second group have an increasing refractive index, and the layers of the third group have a decreasing refractive index. However, this anti-reflection coating is intended for the visible range of wavelengths and none of the layers has a refractive index higher than 2. Moreover, this coating does not comprise a graded-index layer.

The invention will now be described in more detail with reference to the drawings. In the drawings:

Figure 1 shows a substrate for an optical element with a three-layer coating,

Figure 2 shows the reflection coefficient as a function of the wavelength for different values of the substrate refractive index $n_s$ and a fixed value for the refractive index $n_1$ of the top layer.

Figure 3 shows the reflection coefficient as a function of the wavelength for different values of the refractive index $n_1$ of the top layer and a fixed value of the substrate refractive-index $n_s$,

Figure 4 represents the relationship between the refractive index $n_s$ of the substrate and the refractive indices $n_2$ and $n_3$ of the intermediate layers for an optimum anti-reflection coating and a fixed value $n_1 = 1.38$ of the top layer,

Figure 5 shows a first embodiment of an anti-reflection coating in accordance with the invention, and

Figure 6 shows a second embodiment of an anti-reflection layer in accordance with the invention and the associated reflection curve.

For a correct understanding of the invention the principal points are described of a newly developed theory for anti-reflection coatings. This theory utilizes the insight that the laborious task of determining a suitable anti-reflection coating for each type of glass can be simplified substantially if, for a specific substrate, the refractive index is given one of a number of values for which anti-reflection coatings are available.

It is assumed that a three layer anti-reflection coating is used, of which all the layers have an optical thickness of a quarter of the reference wavelength. From the article: "Infrared filters of Anti-reflected Si, Ge, InAs and InSb" in the "Journal of the Optical Society of America", *51*, July 1961, pages 714—8, it is known that for such a coating for a specific wavelength the reflection becomes zero if

$$n_1 \times n_3 = n_2^2 \qquad\qquad 1)$$

and

$$n_2^2 = n_o \times n_s \qquad\qquad 2)$$

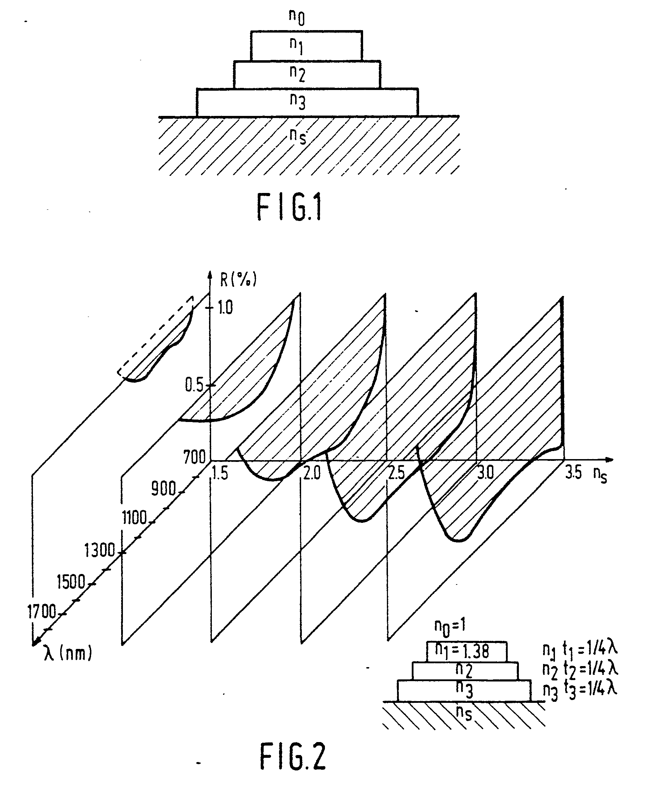

Herein, as is indicated in Figure 1, $n_1$, $n_2$, $n_3$, $n_s$ and $n_o$ are the refractive indices of the layers 1, 2, 3, the substrate and the surrounding medium respectively, which medium will generally be air with $n_o = 1$. It follows from equations 1) and 2) that:

$$n_1 \times n_3 = n_2 \times \sqrt{n_o \times n_s} \qquad\qquad 3)$$

For the specified values of $n_s$ and $n_1$, $n_3$ may be varied in steps, each value of $n_3$ corresponding to a specific value of $n_2$.

As is known, the reflection minimum is flanked with secondary minima. By varying the absolute value of $n_3$ and the corresponding value of $n_2$ the secondary minima can be shifted towards the central minimum and the values of these minima can be reduced so that a low reflection over a comparatively wide range of wavelengths is obtained. The corresponding values of $n_2$ and $n_3$ may be designated $n_{2,m}$ and $n_{3,m}$, so that:

$$n_1 \times n_{3,m} = n_{2,m} \times \sqrt{n_o \times n_s} \qquad\qquad 4)$$

The above bounding condition is not the only one possible and is not even the best one for the present purpose. Generally there is more need for a wide-band anti-reflection coating having a minimal reflection over the entire range of wavelengths than for an anti-reflection coating having zero-reflection at one specific wavelength. In order to achieve this it is necessary to depart from condition 4).

In order to make the reflection curve $R = f(\lambda)$, which represents the reflection coefficient R as a function of the wavelengths, as flat as possible, $n_{3,m}$ must be changed whilst $n_s$, $n_{2,m}$ and $n_1$ are maintained constant. This leads to a value $n_{3,f}$. After this adaption conditions 3) and 1) become:

$$n_1 \times n_{3,f} = c.(n_{2,m} \times \sqrt{n_s}) \qquad 5)$$

$$n_1 \times n_{3,f} = d.(n_{2,m})^2 \qquad 6)$$

in which c and d are constant.

So far, it has been assumed that $n_s$ and $n_1$ are constants, but this does not mean that the actual values of these refractive indices have no influence on the ultimate value of the reflection coefficient R. If, when using the above method of making the reflection curve $R = f(\lambda)$ as low and as flat as possible, the refractive index $n_s$ is varied whilst $n_1$ is kept constant, for example $n_1 = 1,38$, the width of the flat part of the reflection curve is found to depend strongly on $n_s$. Figure 2 shows a family of reflection curves for $n_s$-values of 1.5, 2.0, 2.5, 3.0 and 3.5. Surprisingly, this shows that as $n_s$ increases the reflection coefficient R decreases and the width of the range of wavelengths within which the reflection coefficient remains low increases. Figure 2 shows clearly that the best result is obtained for $n_s = 3.5$.

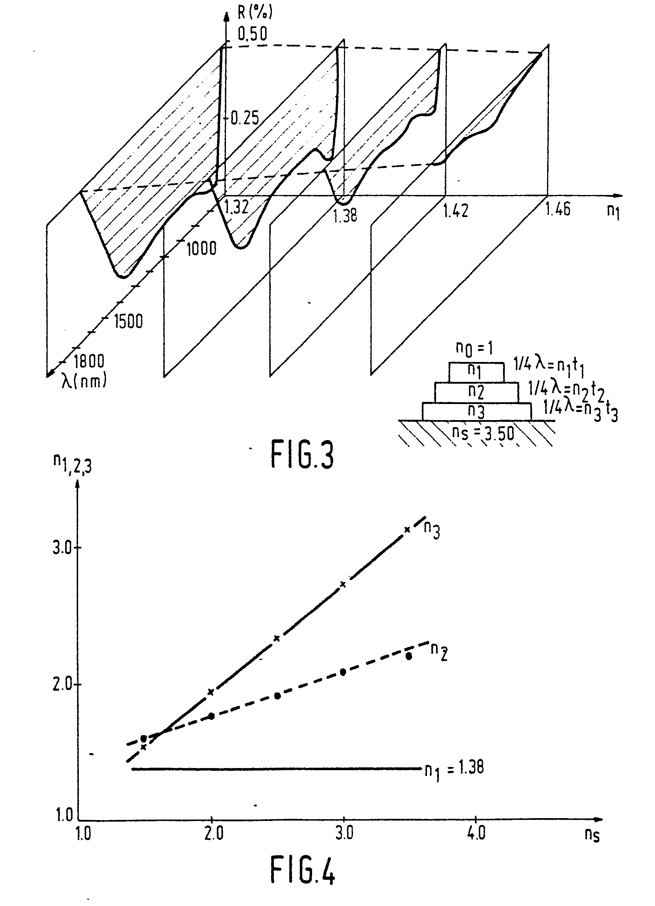

Figure 3 shows a family of reflection curves for a constant value of the substrate index $n_s = 3.5$ and for different values of the refractive index $n_1$ of the top coating. For the different values of $n_1$ the refractive indices $n_2$ and $n_3$ of the intermediate layers may have the following values:

| | | |
|---|---|---|
| $n_1 = 1,32$ | $n_2 = 2,12$ | $n_3 = 3,10$ |
| $n_1 = 1,38$ | $n_2 = 2,21$ | $n_3 = 3,15$ |
| $n_1 = 1,42$ | $n_2 = 2,27$ | $n_3 = 3,17$ |
| $n_1 = 1,46$ | $n_2 = 2,34$ | $n_3 = 3,20$ |

Fig. 3 surprisingly shows that the reflection curve becomes lower and wider as $n_1$ decreases.

This means that the reflection curves of the present anti-reflection coatings are as low as possible and these low values are obtained for the widest possible range of wavelengths if the highest possible $n_s$ is combined with the lowest possible $n_1$.

In practice it has been found that $n_1$ is preferably fixed i.e. a fixed refractive index for the top layer. Preferably, this layer is made of $MgF_2$ with a refractive index of 1.38. Thus, it is possible to calculate the optimum values of $n_3$ and $n_2$ as a function of $n_s$. The results of these calculations are given in Fig. 4. This shows that optimum anti-reflection properties for a substrate with a refractive index $n_s = 3.5$ over a wide range of wavelengths can be obtained if the substrate is coated with three layers whose respective refractive indices are:

$n_3 = 3.1$
$n_2 = 2.2$
$n_1 = 1.38$

all having an optical thickness of $\lambda_o/4$. The layer with a refractive index $n_3 = 3.1$ is made of AlSb or amorphous $Sb_2S_3$ or a mixture of Si and $Si_3N_4$. The layer with the refractive index $n_2 = 2.2$ may have one of the following compositions: $Nb_2O_5$, TiN, $Ta_2O_5$, $Sb_2O_3$. The layer with the refractive index $n_1 = 1.38$ may be composed of $MgF_2$.

In general it is possible to say that for a top layer having a refractive index $n_1 = 1.38$ there is a linear relationship between the refractive indices of the layers 2 and 3 and the substrate index $n_s$, which linear relationship is depicted in Fig. 4.

Glass types intended for used in visible-light optics have refractive indices in the range between approximately 1.45 to approximately 2.0. If the optical components are required to have a comparatively large numerical aperture, such as the optical components in fibre-optic telecommunication systems, the types of glass used for this purpose must have comparatively high refractive indices. In order to enable the above-mentioned anti-reflection coating comprising three layers to be used in optical elements of glass with a refractive index $n_x$ which may have a value between 1.45 and 2.0, a basic coating is deposited on these elements, in accordance with the invention, such that the refractive index is raised to the desired value $n_s$, for example $n_s = 3.5$. Use is made of the fact that for the basic coating a complete range of polycrystalline materials are available with widely varying refractive indices, from for example 1.30 to 3.00 and even to 4.0 for infrared optics.

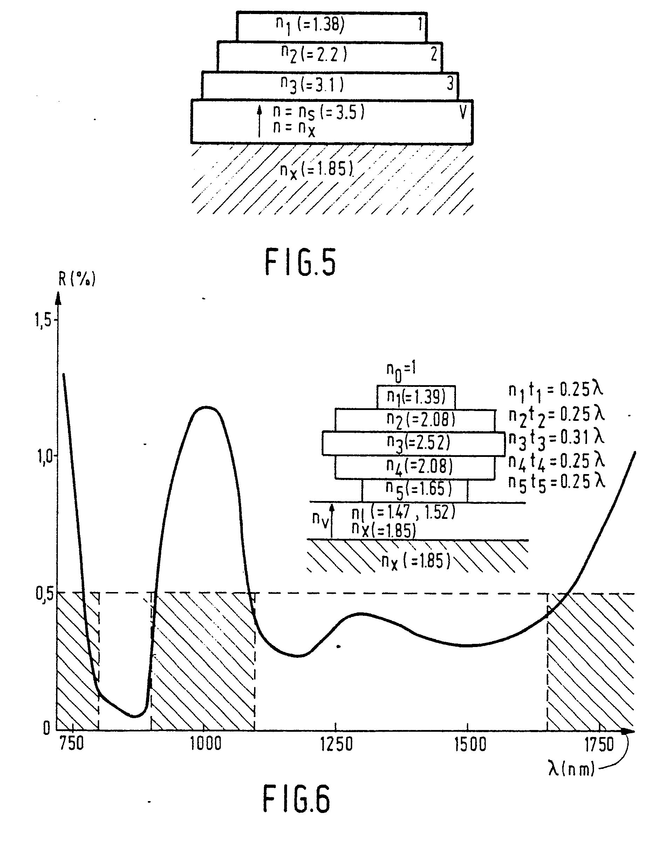

Figure 5 shows an embodiment of an anti-reflection coating in accordance with the invention whose basic coating comprises a single layer v, which is a graded index layer whose refractive index $n_v$ increases continuously from a value $n_x$ at the substrate side to a value $n_s$ at the top. The commonest value for $n_x$ is 1.85, whilst $n_1$ is generally 1.38. As stated in the foregoing, $n_s$ should be as high as possible, in any case higher than 2.5 and preferably about 3.5. The values of $n_2$ and $n_3$ can then be found by means of Fig. 4. The values in parentheses in Figure 5 are the values of the refractive indices in an example of the present embodiment. The layers 1, 2 and 3 all have an optical thickness $n.t = \lambda_o/4$, in which $\underline{t}$ is the geometrical thickness. The thickness of the graded index layer is not material. The varying refractive index in this layer can be obtained by simultaneous vacuum-deposition from two separate sources. The first source must then deliver a material with a refractive index $n_x$ and the second source a material with a refractive index $n_s$.

A single layer with a high refractive index such as the graded index layer $\underline{v}$ in Fig. 5 may exhibit an excessive dispersion for some uses. In accordance with the invention an anti-reflection coating with a lower dispersion can be obtained if first a graded index layer is deposited on the substrate, which layer has a refractive index which decreases from value $n_x$ to a low value $n_1$. The effective refractive index of the substrate plus the graded index layer is subsequently raised by depositing for example two layers 5 and 4 on the graded index layer, as is shown in Fig. 6. The layer 4 has a higher refractive index that this layer 5. On the layer 4 a three-layer top-coating is deposited. Instead of two homogeneous layers three or more homogeneous layers with increasing refractive index may be applied to the graded index layer $\underline{v}$ before the three-layer top coating is applied.

In Fig. 6 the values of the refractive indices in an example of this embodiment are given in parentheses. The top of the graded index layer may have a refractive index $n_1 = 1.47$, which refractive index is equal to that of quartz glass, or a refractive index of 1.52, which corresponds to that of the vacuum-deposition glass "Schott no. 8329". The graded index layer is again applied by simultaneous vacuum-deposition from two sources. In the case of a cold substrate the source 1 may contain $Yb_2O_3$ with $n_x = 1.83$ and source 2 may contain $CeF_3$ with $n_1 = 1.52$ or $SiO_2$ with $n_1 = 1.47$. When vacuum-deposition is effected on a hot substrate source 1 may for example contain $Dy_2O_3$ with $n_x = 1.83$ and source 2 may contain a B-Na-Al-K vacuum-deposition glass such as "Schott No. 8329" with $n_1 = 1.52$ or quartz glass with $n_1 = 1.47$. The layers 1 to 5 of the coating are made of $MgF_2$, $Nb_2O_5$, $CdS$, $Nb_2O_5$ and $Al_2O_3$ or $MgTiO_3$ respectively. A hot substrate is a substrate which is heated to a temperature of, for example, 300°C.

By applying the layers 5 and 4 with refractive indices of 1.65 and 2.08 an increase in refractive index to 2.5 is achieved, i.e. the assembly comprising the substrate, the graded index layer and the layers 5 and 4 behaves as a type of glass with an effective refractive index $n_s = 2.5$, which type of glass has a reflection coefficient of approximately 18%. The reflection of this assembly is eliminated by a top coating of three homogeneous layers.

Figure 6 also shows the variation of the reflection coefficient as a function of the wavelength for the present embodiment. It appears that in the wavelength range from 800 nm to 900 nm in which GaAs-type diode lasers emit and in the wavelength range from 1100 nm to 1650 nm in which diode lasers of the InP-type emit the reflection coefficient remains well below 0.5%.

It is to be noted that the layer 3 has an optical thickness of 0.31 $\lambda_o$, and that the layers 1, 2, 4 and 5 have optical thicknesses equal to $\lambda_o/4$. The thickness of the graded index layer is not material. The optical thickness of the layers need not be exactly $\lambda_o/4$. The reflection curve can be shifted slightly by changing this thickness. This allows an optimization if a special reflection behaviour is required for specific wavelengths.

A material which is very suitable for use in one of the layers of the top coating is lead titanate ($PbTiO_3$). An advantage of this material is that it can be applied by spinning or dipping so that it is not necessary to use a vacuum method. For this purpose a solution of lead acetate and tetraglycol monoethyl ether may be used. A thin layer of this solution is formed on a surface by spinning or dipping. Heating at 500°C yields a lead titanate having a refractive index of approximately 2.40. This is a hard scratch-proof layer of a high optical quality. Heating at higher temperatures does not result in a higher refractive index. Since the refractive index of n = 2.40 is already obtained at a heating temperature of 500°C lead titanate is suitable for deposition on surfaces of objects which cannot withstand high temperatures.

Another suitable material, which may also be applied by spinning or dipping, is iron oxide ($Fe_2O_3$). For this purpose a thin layer of a solution of ferric nitrate ($Fe(NO_3)_3$) in ethylene-glycol monoethyl ether may be deposited on a surface by spinning or dipping. This layer is dried at 80°C and subsequently heated, for example at 500°C, which yields an $Fe_2O_3$ layer having a refractive index of 2.30 to 2.40. The refractive index thus obtained depends on the heating temperature. Heating at 750°C yields a refractive index of 2.40 to 2.50 and heating at 1000°C yields a refractive index of 2.9 to 3.00.

The invention may be employed for reducing the reflection of optical elements in fibre-optic telecommunication systems, such as lenses and fibre end-faces, but is not limited thereto. The anti-reflection coatings described here may also be applied to elements of infrared scanning systems.

## Claims

1. An optical element comprising a transparent substrate provided with an anti-reflection coating, which comprises a top coating of a plurality of uniform layers whose refractive indices decrease towards the outside, and an underlying basic coating, characterized in that the effective refractive index at the top of the basic coating is at least 2.5 and that this basic coating comprises a graded-index layer whose refractive index at the location of the substrate is equal to that of the substrate, the anti-reflection coating being effective in the range of wavelengths from approximately 700 nm to approximately 1700 nm.

2. An optical element as claimed in Claim 1, characterized in that the basic coating is formed of a single graded index layer having a refractive index which is at least 2.5 at the top of the layer, and in that the top coating comprises three homogeneous layers which each have an optical thickness equal to $\lambda_o/4$, $\lambda_o$ being a reference wavelength.

3. An optical element as claimed in Claim 2, characterized in that the refractive index at the top of the graded-index layer is at least 3.5, which layer comprises one of the following mixtures:

Si and $Si_3N_4$
Si, $Si_3N_4$ and $SiO_2$
GaP and GaN
GaP, GaN and $Ga_2O_3$
PbS and ZnS
PbS, ZnS and a B-Na-Al-K glass.

4. An optical element as claimed in Claim 3, characterized in that the three layers of the top coating have the following refractive indices and are made of the materials specified below these indices:

| $n_1 = 1.38$ | $n_2 = 2.2$ | $n_3 = 3.1$ |
|---|---|---|
| $MgF_2$ | $Nb_2O_5$ | AlSb |
| - | TiN | amorphous $Sb_2S_3$ |
| | $Ta_2O_5$ | mixture of Si and |
| | $Sb_2O_3$ | $Si_3N_4$ |

5. An optical element as claimed in Claim 1, characterized in that the basic coating comprises a first, graded index, layer whose refractive index decreases towards the outside to a value lower than that of the substrate refractive index and at least two homogeneous layers whose refractive indices increase towards the outside, and in that the top coating comprises three layers which each have an optical thickness equal to $\lambda_o/4$, $\lambda_o$ being the reference wavelength.

6. An optical element as claimed in Claim 5, characterized in that five layers are deposited on the graded index layer, which layers, from the outside towards the inside, have the following refractive indices, compositions and optical thicknesses:

| $n_1 = 1.39$ | $MgF_2$ | $0.25\,\lambda_o$ |
|---|---|---|
| $n_2 = 2.08$ | $Nb_2O_5$ | $0.25\,\lambda_o$ |
| $n_3 = 2.52$ | Cds | $0.31\,\lambda_o$ |
| $n_4 = 2.08$ | $Nb_2O_5$ | $0.25\,\lambda_o$ |
| $n_5 = 1.65$ | $Al_2O_3$ | $0.25\,\lambda_o$ |

7. An optical element as claimed in any one of the Claims 1, 2, 3 and 5, characterized in that one of the layers of the anti-reflection coating consists of lead titanate having a refractive index of approximately 2.4, which layer is applied by spinning or dipping in a solution of lead acetate and tetra isopropyl orthotitanate in ethylene glycol monoethyl ether and subsequent heating at approximately 500°C.

8. An optical element as claimed in any one of the Claims 1, 2, 3 and 5, characterized in that one of the layers of the anti-reflection coating consists of iron oxide ($Fe_2O_3$) which is applied by spinning or dipping in a solution of ferric nitrate in ethylene glycol monoethyl ether and subsequent heating.

**Patentansprüche**

1. Optisches Element das ein durchsichtiges Substrat und eine reflexionsvermindernde Beschichtung enthält, die aus einer oberen Beschichtung mit einer Anzahl einheitlicher Schichten, deren Brechungsindizes nach aussen hin abnehmen, und einer darunter befindlichen Grundbeschichtung besteht, dadurch gekennzeichnet, dass der wirksame Brechungsindex an der Oberfläche der Grundbeschichtung wenigstens 2,5 beträgt und dass diese Grundbeschichtung eine Gradientenschicht enthält, deren Brechungsindex an der Stelle des Substrats gleich dem des Substrats ist, wobei die reflexionsvermindernde Beschichtung im Wellenlängenbereich von etwa 700 nm bis etwa 1700 nm wirksam ist.

2. Optisches Element nach Anspruch 1, dadurch gekennzeichnet, dass die Grundbeschichtung aus nur einer Gradientenschicht gebildet ist mit einem Brechungsindex der wenigstens 2,5 an der Oberfläche der Schicht beträgt, und dass die obere Beschichtung drei homogene Schichten enthält, die je eine optische Dicke gleich $\lambda_o/4$ haben, worin $\lambda_o$ eine Referenzwellenlänge ist.

3. Optisches Element nach Anspruch 2, dadurch gekennzeichnet, dass der Brechungsindex an der Oberfläche der Gradientenschicht wenigstens 3,5 beträgt, und diese Schicht eine der folgenden Mischungen enthält.

Si und $Si_3N_4$

Si, $Si_3N_4$ und $SiO_2$
GaP und GaN
GaP, GaN und $Ga_2O_3$
PbS und ZnS
PbS, ZnS und eine B-na-Al-K Glas.

4. Optisches Element nach Anspruch 3, dadurch gekennzeichnet, dass die drei Schichten der oberen Beschichtung folgende Brechungsindizes haben und aus den unter diesen Indizes angegebenen Werkstoffen bestehen:

| $n_1 = 1,38$ | $n_2 = 2,2$ | $n_3 = 3,1$ |
|---|---|---|
| $MgF_2$ | $Nb_2O_5$ | AlSb |
| | TiN | amorphes $Sb_2S_3$ |
| | $Ta_2O_5$ | Mischuung von Si und |
| | $Sb_2O_3$ | $Si_3N_4$ |

5. Optisches Element nach Anspruch 1, dadurch gekennzeichnet, dass die Grundbeschichtung eine erste Gradientenschicht, dessen Brechungsindex nach aussen hin auf einen Wert abnimmt, der geringer als der Brechungsindex des Substrats ist, und wenigstens zwei homogene Schichten enthält, deren Brechungsindizes nach der Aussenseite hin ansteigen, und dass die oberen Beschichtung drei Schichten enthält, die je eine optische Dicke gleich $\lambda_o/4$ besitzt, worin $\lambda_o$ die Referenzwellenlänge ist.

6. Optisches Element aus Anspruch 5, dadurch gekennzeichnet, dass fünf Schichten auf der Gradientschicht abgelagert sind, die von aussen nach innen gehend folgende Brechungsindizes, Zusammensetzungen und optische Dicken besitzen:

$n_1 = 1,39 MgF_2$ 0,25 $\lambda_o$
$n_2 = 2,08 Nb_2O_5$ 0,25 $\lambda_o$
$n_3 = 2,52 CdS$ 0,31 $\lambda_o$
$n_4 = 2,08 Nb_2O_5$ 0,25 $\lambda_o$
$n_5 = 1,65 Al_2O_3$ 0,25 $\lambda_o$

7. Optisches Element nach einem der Ansprüche 1, 2, 3 und 5, dadurch gekennzeichnet, dass eine der Schichten der reflexionsvermindernden Beschichtung aus Bleititanat mit einem Brechungsindex von etwa 2,4 besteht, wobei diese Schicht durch Wirbeln oder Eintauchen in eine Lösung aus Bleiazetat und Tetra Isopropyl Orthotitanat in Äthylenglyzerin-Monoäthyläther angebracht wird und dann auf etwa 500°C erwärmt wird.

8. Optisches Element nach einem der Ansprüche 1, 2, 3 und 5, dadurch gekennzeichnet, dass eine der Schichten der reflexionsvermindernden Beschichtung aus Eisenoxid ($Fe_2O_3$) besteht, die durch Wirbeln oder Eintauchen in eine Lösung aus Eisennitrat in Äthylenglyzerin-Monoäthyläther angebracht wird und dann erwärmt wird.

**Revendications**

1. Elément optique comportant un substrat transparent muni d'un revêtement anti-réflexion, comprenant un revêtement supérieur de plusieurs couches uniformes, dont les indices de réfraction diminuent vers l'extérieur, et un revêtement de base sous-jacent, caractérisé en ce que l'indice de réfraction effectif à la face supérieure du revêtement de base est d'au moins 2,5 et que ce revêtement de base comprend une couche à gradient d'indice, dont l'indice de réfraction à l'endroit du substrat est égal à celui du substrat, le revêtement anti-réflexion étant effectif dans la gamme de longueurs d'onde comprise entre environ 700 nm et environ 1700 nm.

2. Elément optique selon la revendication 1, caractérisé en ce que le revêtement de base est formé par une seule couche à gradient d'indice présentant un indice de réfraction qui est d'au moins 2,5 à la face supérieure de la couche et que le revêtement supérieur comporte trois couches homogènes qui présentent chacune un épaisseur optique égale à $\lambda_o/4$, $\lambda_o$ étant un longueur d'onde de référence.

3. Elément optique selon la revendication 2, caractérisé en ce que l'indice de réfraction effectif à la face supérieure de la couche à gradient d'indice est d'au moins 3,5 couche qui comporte l'un des mélanges suivants.

Si et $Si_3N_4$
Si, $Si_3N_4$ et $SiO_2$
GaP et GaN
GaP, GaN et $Ga_2O_3$
PbS et ZnS
PbS, ZnS et un verre à base de B-Na-Al-k.

4. Elément optique selon la revendication 3, caractérisé en ce que les trois couches du revêtement supérieur présentent les indices de réfraction suivants et sont réalisés en matériaux spécifiés au-dessous de ces indices:

| $n_1 = 1,38$ | $n_2 = 2,2$ | $n_3 = 3,1$ |
|---|---|---|
| $MgF_2$ | $Nb_2O_5$ | AlSb |
| | TiN | $Sb_2S_3$ amorphe |
| | $Ta_2O_5$ | mélange de Si et |
| | $Sb_2O_3$ | $Si_3N_4$ |

5. Elément optique selon la revendication 1, caractérisé en ce que le revêtement de base comporte un première couche à gradient d'indice, dont l'indice de réfraction diminue vers l'extérieur jusqu'à une valeur inférieure à celle de l'indice de réfraction du substrat et au moins deux couches homogènes, dont les indices de réfraction augmentent vers l'extérieur, et que le revêtement supérieur comporte trois couches, qui présentent chacune une épaisseur optique égale à $\lambda_o/4$, $\lambda_o$ étant la longueur d'onde de référence.

6. Elément optique selon la revendication 5, caractérisé en ce que cinq couches sont déposées sur la couche à gradient d'indice, couches qui, à partir de l'extérieur vers l'intérieur, présentent les indices de réfraction, compositions et épaisseurs optiques suivants:

| $n_1 = 1,39$ | $MgF_2$ | $0,25 \lambda_o$ |
|---|---|---|
| $n_2 = 2,08$ | $Nb_2O_5$ | $0,25 \lambda_o$ |
| $n_3 = 2,52$ | CdS | $0,31 \lambda_o$ |
| $n_4 = 2,08$ | $Nb_2O_5$ | $0,25 \lambda_o$ |
| $n_5 = 1,65$ | $Al_2O_3$ | $0,25 \lambda_o$ |

7. Elément optique selon l'une revendications 1, 2, 3 et 5 caractérisé en ce que l'une des couches du revêtement anti-réflexion est constituée par du titanate de plomb présentant un indice d réfraction d'environ 2, 4, cette couche étant appliquée par centrifugation ou immersion dans une solution d'acétate de plomb et de tétraisopropyl orthotitanate dans de l'éther monoéthlique d'éthylène glycol et ensuite chauffage à environ 500°C.

8. Elément optique selon l'une des revendications 1, 2, 3 et 5, caractérisé en ce qu'une des couches du revêtement anti-réflexion est constituée par de l'oxyde de fer ($Fe_2O_3$), et appliquée par centrifugation ou immersion dans une solution de nitrate de fer dans de l'éther monoéthylique d'éthylène glycol, et suivi d'un chauffage.

FIG.1

FIG.2

FIG.3

FIG.4

FIG.5

FIG.6